(19) Europäisches Patentamt
European Patent Office
Office européen des brevets

(11) **EP 2 661 001 A1**

(12) **EUROPEAN PATENT APPLICATION**
published in accordance with Art. 153(4) EPC

(43) Date of publication:
06.11.2013 Bulletin 2013/45

(51) Int Cl.:
*H04J 11/00* (2006.01)     *G06F 17/14* (2006.01)

(21) Application number: 11853120.1

(22) Date of filing: 27.12.2011

(86) International application number:
PCT/JP2011/080213

(87) International publication number:
WO 2012/091013 (05.07.2012 Gazette 2012/27)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 27.12.2010 JP 2010290031

(71) Applicants:
• NEC Corporation
Tokyo 108-8001 (JP)

• NTT DoCoMo, Inc.
Tokyo 100-6150 (JP)

(72) Inventor: HASHIMOTO, Takeshi
Tokyo 108-8001 (JP)

(74) Representative: Vossius & Partner
Siebertstrasse 4
81675 München (DE)

(54) **RECEPTION DEVICE, RECEPTION METHOD, AND COMPUTER PROGRAM**

(57)     A reception device, reception method, and computer program for receiving a signal that includes a frequency-domain channel estimation value comprising N (where N is a power of 2) items of data, and obtaining a time-domain channel estimation value by performing P (where P is equal to $\log_2 N$) discrete Fourier transform (DFT) computations on the frequency-domain channel estimation value, wherein the amount of computation is reduced. An $M^{th}$ (where M is equal to 2 to P) DFT computation, at which DFT computation is to be started from amongst the P DFT computations, is determined from the number of items of data that could not be substituted with 0 from amongst the N items of data constituting the frequency-domain channel estimation value obtained from the received signal; a rotator is generated for computing data to be inputted into the $M^{th}$ DFT computation that has been determined; data to be inputted into the $M^{th}$ DFT computation is calculated from the generated rotator and the frequency-domain channel estimation value obtained from the received signal; and the $M^{th}$ to $P^{th}$ DFT computations are performed, whereby the time-domain channel estimation value is computed.

Fig.1

**Description**

{Technical Field}

The present application claims priority from Japanese Patent Application No. 2010-290031 filed on December 27, 2010, the contents of which are incorporated herein by reference.
The present invention relates to a receiver, a receiving method, and a computer program. {Background Art}
In recent years, Orthogonal Frequency Division Multiplexing Access (OFDMA), which is a wireless access scheme having a high frequency-use-efficiency, is used for the purpose of an increase of communication speed in a field of wireless communication. OFDM is adopted, for example, in digital terrestrial broadcasting and wireless Local Area Network (LAN), and also in mobile communication as well as in Long Term Evolution for which a standardization approach by using a new communication scheme is now discussed in 3rd Generation Partnership Project (3GPP).

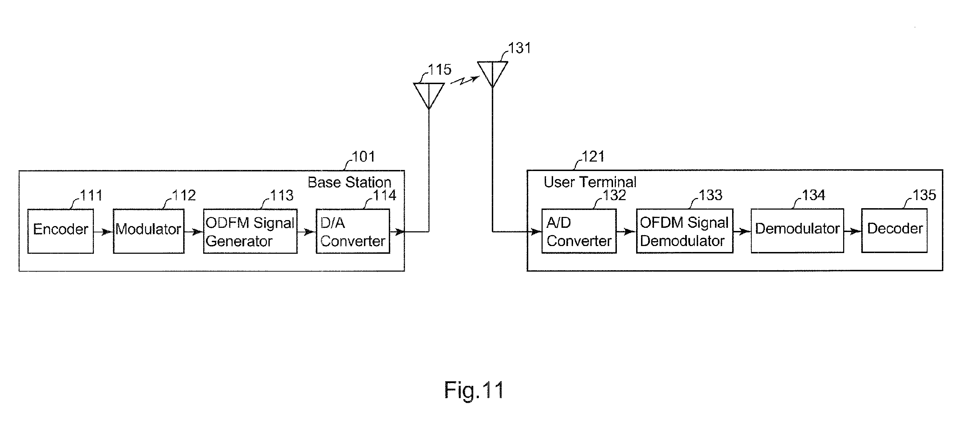

Fig. 11 is an overall configuration diagram of a communication system using a conventional OFDM scheme. In a base station 101, at first, a Central Processing Unit (CPU) (not shown) of the base station 101 makes data to be transmitted be input into an encoder 111 as information bits. Then, the encoder 111 adds a CRC (Cyclic Redundancy Check) to the input information bits, and carries out convolutional coding with respect to the input information bits. Then, a modulator 112 modulates the input encoded data. An OFDM signal generator 113 performs mapping the modulated data onto a frequency axis, and transforms the data on the frequency axis into data on a time axis by way of an Inverse Digital Fourier Transform. Then, the transformed data is output to a Digital/Analog (D/A) converter 114. The D/A converter 114 converts a digital signal of the transformed data, which is output from the OFDM signal generator 113, into an analog signal. Then, the modulated data, converted into the analog signal, is transmitted through a plurality of antennas 115.
A receiving side has a user terminal 121. The user terminal 121 receives the data, transmitted out of the antennas 115 of the base station 101, by the intermediary of a plurality of antennas 131. At this point, it is taken into consideration that the data received by the antennas 131 is affected by noise during the time of propagating through space after being launched from the antennas 115. The data received by the antennas 131 is input into an Analog/Digital (A/D) converter 132. The A/D converter 132 converts the analog signal of the input data into a digital signal. The A/D converter 132 outputs the converted digital signal to an OFDM signal demodulator 133. Then, the OFDM signal demodulator 133 transforms the digital signal on the time axis, which is output from the A/D converter 132, into data on a frequency axis by means of a Digital Fourier Transform, and carries out mapping the data on an I-Q plane. A demodulator 134 demodulates the data output from the OFDM signal demodulator 133, the data being mapped on the I-Q plane. Then, the demodulator 103 outputs the demodulated data, obtained by means of demodulation, to a decoder 135. The decoder 135 performs error correction decoding with respect to the input demodulated data. By using decoded data obtained as a result, a processing circuit in a later stage, such as a CPU, carries out a predetermined process.
In the OFDM signal demodulator 133 of the communication system using the OFDM scheme, channel estimation processing is performed for propagation path compensation. With respect to such the OFDM scheme, it is known that an accuracy of a channel estimation value can be improved by way of time-domain noise suppression, while a channel estimation value obtained in a frequency domain being transformed into a time domain.
For the time-domain noise suppression of the channel estimation value, a transform from a frequency domain to a time domain is needed, and furthermore it is needed to transform the channel estimation value after the noise suppression into a frequency domain. Namely, for one-time noise suppression of the channel estimation value, Inverse Fast Fourier Transform (IFFT) and Fast Fourier Transformation (FFT) need to be performed each one time. For Fourier Transform of a digital signal, as a general rule, algorithms of the Fast Fourier Transform (FFT) and its inverse transform, namely the Inverse Fast Fourier Transform (IFFT), are used in order to reduce the amount of computations.
Meantime, patent literature PTL 1 discloses a scheme for suppressing a noise contained in a time-domain channel estimation value, for channel estimation in wireless communication in which a great number of subcarriers are used for communication.
According to the disclosure of PTL 1, a channel estimation value from a pilot signal mapped in each subcarrier is obtained in a frequency domain, and an Inverse Fast Fourier Transform is performed in order to transform the channel estimation value into a time-domain channel estimation value. Then, for transforming the channel estimation value after noise suppression into a frequency-domain channel estimation value, a Fourier Transform is used.

{Citation List}

{Patent Literature}

PTL 1: JP2008-124964A

{Summary of Invention}

{Technical Problem}

Unfortunately, in an OFDM scheme in which a lot of data processing operations are required, a reduction in the amount of processing operation for each constituent element becomes necessary.

Thus, it is an object of the present invention to provide a receiver, a receiving method and a computer program, that give a solution to the issue described above; namely that make it possible to further reduce computations.

{Solution to Problem}

To give a solution to the issue described above, an aspect of a receiver of the present invention is; a receiver for receiving a signal containing a frequency-domain channel estimation value composed of N pieces of data (wherein N is a power of 2), and computing a time-domain channel estimation value by way of DFT (Discrete Fourier Transform) computations of P times (P represents $\log_2 N$) with respect to the channel estimation value, the receiver comprising: a determination means for determining an $M^{th}$ DFT computation (M is equal to or greater than 2, and equal to or less than P), with which the DFT computation begins, out of the DFT computations of P times, according to the number of data, having been not replaced with '0', out of the N pieces of data constituting the frequency-domain channel estimation value obtained from the signal received; a generation means for generating a twiddle factor for computing a datum to be input into the $M^{th}$ DFT computation determined; a calculation means for calculating a datum to be input into the $M^{th}$ DFT computation, by using the frequency-domain channel estimation value obtained from the signal received and the twiddle factor generated; and a computation means for computing the time-domain channel estimation value by performing DFT computations in a range from the $M^{th}$ DFT computation to the $P^{th}$ DFT computation.

Moreover, an aspect of a receiving method of the present invention is; a receiving method for receiving a signal containing a frequency-domain channel estimation value composed of N pieces of data (wherein N is a power of 2), and computing a time-domain channel estimation value by way of DFT computations of P times (P represents $\log_2 N$) with respect to the channel estimation value, the receiving method comprising steps of: determining an $M^{th}$ DFT computation (M is equal to or greater than 2, and equal to or less than P), with which the DFT computation begins, out of the DFT computations of P times, according to the number of data, having been not replaced with '0', out of the N pieces of data constituting the frequency-domain channel estimation value obtained from the signal received; generating a twiddle factor for computing a datum to be input into the $M^{th}$ DFT computation determined; calculating a datum to be input into the $M^{th}$ DFT computation, by using the frequency-domain channel estimation value obtained from the signal received and the twiddle factor generated; and computing the time-domain channel estimation value by performing DFT computations in a range from the $M^{th}$ DFT computation to the $P^{th}$ DFT computation.

Furthermore, an aspect of a computer program of the present invention is; a computer program of a computer constituting a receiver for receiving a signal containing a frequency-domain channel estimation value composed of N pieces of data (wherein N is a power of 2), and computing a time-domain channel estimation value by way of DFT computations of P times (P represents $\log_2 N$) with respect to the channel estimation value, the computer program comprising: a determination step for determining an $M^{th}$ DFT computation (M is equal to or greater than 2, and equal to or less than P), with which the DFT computation begins, out of the DFT computations of P times, according to the number of data, having been not replaced with '0', out of the N pieces of data constituting the frequency-domain channel estimation value obtained from the signal received; a generation step for generating a twiddle factor for computing a datum to be input into the $M^{th}$ DFT computation determined; a calculation step for calculating a datum to be input into the $M^{th}$ DFT computation, by using the frequency-domain channel estimation value obtained from the signal received and the twiddle factor generated; and a computation step for computing the time-domain channel estimation value by performing DFT computations in a range from the $M^{th}$ DFT computation to the $P^{th}$ DFT computation.

{Advantageous Effects of Invention}

According to a first aspect of the present invention, it becomes possible to provide a receiver, a receiving method and a computer program that make it possible to further reduce computations.

{Brief Description of Drawings}

Fig. 1 is a block diagram showing a configuration example of a section for demodulating an OFDM signal of a receiver.
Fig. 2 is a drawing for explaining a computation example of a Fast Fourier Transform applying radix-2 in which a 2-point DFT computation is a basic element.

Fig. 3 is a drawing that shows a 2-point DFT computation in a Fast Fourier Transform applying radix-2.

Fig. 4 is a drawing that explains a group of DFT computations in the case where one of both ends of the numbers of channel estimation value data that are not replaced with '0' is equal to or greater than 3 (= N/8 + 1) and equal to or less than 4 (=N/4).

Fig. 5 is a drawing that explains a group of DFT computations in the case where one of both ends of the numbers of channel estimation value data  that are not replaced with '0' is 2 (= N/16 + 1).

Fig. 6 is a drawing that explains a group of DFT computations in the case where one of both ends of the numbers of channel estimation value data that are not replaced with '0' its 1 (= N/16).

Fig. 7 is a flowchart for explaining an operation of FFT.

Fig. 8 is a drawing that shows an example of relationships among an address a, an address a', and a twiddle factor W to be multiplied.

Fig. 9 is a block diagram showing a configuration example of a section for demodulating an OFDM signal of a receiver in another embodiment of the present invention.

Fig. 10 is a block diagram showing a configuration example of hardware of a computer.

Fig. 11 is an overall configuration diagram of a communication system using a conventional OFDM scheme.

{Description of Embodiments}

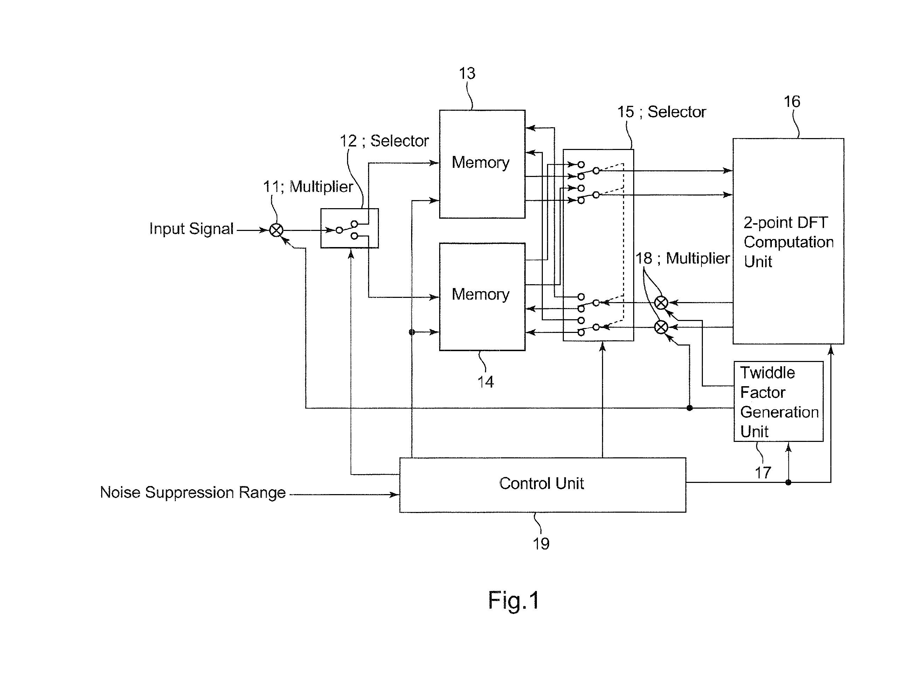

A receiver of a preferred embodiment of the present invention is explained below with reference to the accompanied drawings through Fig. 1 to Fig. 8.

Fig. 1 is a block diagram showing a configuration example of a section for demodulating an OFDM signal of a receiver. The section for demodulating an OFDM signal of the receiver is so configured as to include a multiplier 11, a selector 12, a memory 13, another memory 14, another selector 15, a 2-point DFT computation unit 16, a twiddle factor generation unit 17, another multiplier 18, and a control unit 19.

The multiplier 11 multiplies an input signal by a twiddle factor generated in the twiddle factor generation unit 17, and supplies a product datum obtained as a result of the multiplication to the selector 12. Regarding the twiddle factor, an  explanation is made later.

The selector 12 is a selector for selecting a storage destination for an input signal, and it supplies a datum supplied from the multiplier 11 to either the memory unit 13 or the memory unit 14, according to an instruction coming from the control unit 19. The memory unit 13 and the memory unit 14 are each composed of a semiconductor memory or the equivalent; and these units store input data, output data or intermediary values of a Fast Fourier Transform. The memory unit 13 and the memory unit 14 are each structured in such a way as to store N sets of complex data. Incidentally, the input data of a Fast Fourier Transform include a product of an input signal and a twiddle factor, the product being supplied from the multiplier 11 by the intermediary of the selector 12.

In a computation of a Fast Fourier Transform, the selector 15 is a selector that switches between the memory unit 13 and the memory unit 14 as a readout source of an input datum (an input datum or an intermediary value to the Fast Fourier Transform) to the 2-point DFT computation unit 16 and a write destination of an output datum (an output datum or an intermediary value from the Fast Fourier Transform).

The 2-point DFT computation unit 16 applies a DFT computation with a radix-2, to the input datum or the intermediary value of the Fast Fourier Transform, the input datum and the intermediary value being stored in one of the memories 13 and 14 and being supplied through the selector 15; and then the 2-point DFT computation unit 16 supplies a result obtained by the computation to the multiplier 18.

The twiddle factor generation unit 17 generates a twiddle factor by which an input signal or an output datum coming from the 2-point DFT computation unit 16  is multiplied.

The multiplier 18 multiplies the result of the DFT computation with a radix-2 by an operator supplied from the twiddle factor generation unit 17, the result of the DFT computation being supplied from the 2-point DFT computation unit 16. Then, a datum of a product obtained as a result of the multiplication is supplied through the selector 15 to the other of the memories 13 and 14, as an output datum of the Fast Fourier Transform. In this context, when the memory 13 stores the input datum or the intermediary value to the DFT computation with a radix-2 in the 2-point DFT computation unit 16, "the other of the memories 13 and 14" represents the memory 14. Meanwhile, when the memory 14 stores the input datum or the intermediary value to the DFT computation with a radix-2 in the 2-point DFT computation unit 16, "the other of the memories 13 and 14" represents the memory 13.

Referring to the numbers of channel estimation value data that are not replaced with '0', the control unit 19 controls the selector 12, the memories 13 and 14, the selector 15, the 2-point DFT computation unit 16, and the twiddle factor generation unit 17, the numbers of channel estimation value data having been input as a range for noise suppression, and having been obtained as a result of noise suppression. Then, the control unit 19 conducts various operations, such as selecting a write destination of an input signal, generating a readout address or a write address of the memory 13 or 14, controlling a twiddle factor generating operation, regulating or controlling the number of 2-point DFT computations or processing stages, and selecting a readout source of an input datum of the 2-point DFT computations or a write destination of an output datum of the same.

Explained below in this context is a Fast Fourier Transform applying radix-2 in which a 2-point DFT computation is a basic element, the Fast Fourier Transform being performed in a section of a receiver where an OFDM signal is demodulated, and being a type of Cooley-Tukey fast Fourier transform.

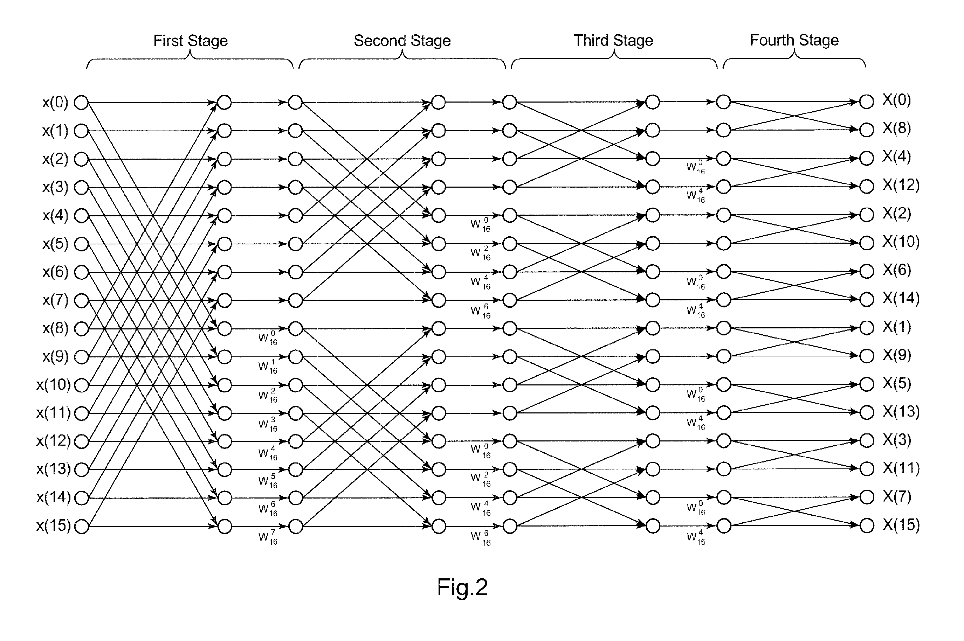

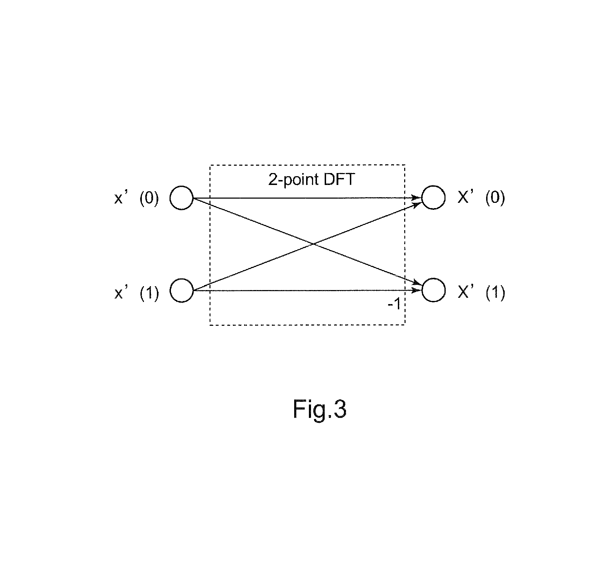

Fig. 2 is a drawing for explaining a computation example of a Fast Fourier Transform applying radix-2 in which a 2-point DFT computation is a basic element. In Fig. 2, a circle represents each input datum of x(0) to x(15) (namely, each datum of frequency-domain channel estimation values), each intermediary value, or each output datum of X(0) to X(15) (namely, each datum of time-domain channel estimation values). In Fig. 2, each arrow represents a use of an input datum, an intermediary datum, or an output datum. At each destination end of two arrows, added is an input datum or an intermediary value indicated at each root end of the arrows. At the time, the input datum or the intermediary value indicated at each root end of the arrows is multiplied by each of twiddle factors of $W_{16}^0$ to $W_{16}^7$ described under the arrow. The same operation as explained above is carried out in Fig. 3 to Fig. 6 as well.

When the number of data is expressed as N (wherein N is a power of 2 (in the case of a radix being 2)), a Fast Fourier Transform of a Cooley-Tukey type is resolved into a group of DFT computations of $\log_2 N$ times, in the case of a radix being 2. In the explanation below in this context, $\log_2 N$ is expressed as P.

In the group of DFT computations of P times, a group of DFT computations at each time is referred to as a stage. Then, stages are referred to as a first stage, a second stage, - - -, a $P^{th}$ stage, starting from an input side. Fig. 2 shows an example of a Fast Fourier Transform with a first stage to a fourth stage, in the case of N = 16.

As a Fast Fourier Transform of a Cooley-Tukey type, there are two types of possible configurations; namely, a decimation-in-time type and a decimation-in-frequency type; depending on a way of resolving into 2-point DFT computations. On this occasion, a Fast Fourier Transform having a configuration of a decimation-in-frequency type is explained as an example. Incidentally, any other radix than radix-2 can be adopted, and it is also possible to adopt a configuration of a decimation-in-time type.

Fig. 3 is a drawing that shows a 2-point DFT computation in a Fast Fourier Transform applying radix-2.

An output X'(m) of a 2-point DFT computation is calculated by using Expression (1). Each of X'(m) and x'(m) is a complex number, and "j" is an imaginary unit.

$$X'(0) = x'(0) + x'(1)$$

$$X'(1) = x'(0) \cdot x'(1) \qquad \qquad \cdots (1)$$

It is known that, though according to PTL 1, a time-domain channel estimation value is replaced with '0' by using a threshold TH, a peak of power frequently appears at both ends in an actual propagation path so that most of channel estimation values in the vicinity of a middle portion are replaced with '0'.

In the case where the number of channel estimation values to be replaced with '0' is N/4 points toward both the ends from the middle portion, namely when the number of channel estimation values is N/2 points or more in total, the amount of FFT computations can be reduced. Incidentally, in the above explanation, N is a power of 2, which is equal to or greater than 8.

A way of reducing the amount of computations is explained below by using an example of an FFT operation with N = 16, in which a DFT computation applying radix-2 is performed in the same way as described above.

Incidentally, the following explanation is made, while assuming some cases according to the number of channel estimation values, at both the ends, which are not replaced with '0'.

Explained at first is a case in which one of both ends of the numbers of channel estimation value data that are not replaced with '0' is equal to or greater than 3 (= N/8 + 1) and equal to or less than 4 (= N/4).

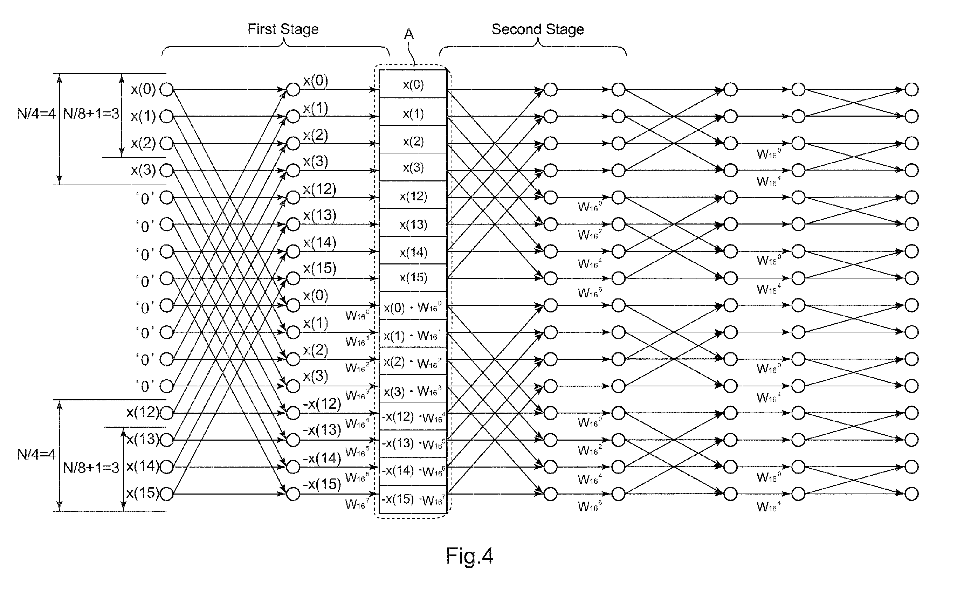

Fig. 4 is a drawing that explains a group of DFT computations in the case where one of both ends of the numbers of channel estimation value data that are not replaced with '0' is equal to or greater than 3 (= N/8 + 1) and equal to or less than 4 (= N/4).

As shown in Fig. 4, if a computation for a channel estimation value replaced with '0' is taken into consideration, and a datum (an input datum) at a position, not being '0', multiplied by a twiddle factor W is prepared for an input to the second stage in advance, a DFT computation at the first stage can be skipped. Then, a Fast Fourier Transform can get started from the second stage, while a multiplication by the twiddle factor W being implemented.

Namely, as "A" shows in Fig. 4, without the DFT computation at the first stage, x(0), x(1), x(2), x(3), x(12), x(13), x(14), x(15), x(0)*$W_{16}^0$, x(1)*$W_{16}^1$, x(2)*$W_{16}^2$, x(3)*$W_{16}^3$, -x(12)*$W_{16}^{12}$, -x(13)*$W_{16}^5$, -x(14)*$W_{16}^6$, and -x(15)*$W_{16}^7$,

are calculated, and input into the second stage.

Moreover, as shown in Fig. 3, for a 2-point DFT computation accompanies by a sign inversion for an input datum, replacement can be made by making use of a symmetric property of a twiddle factor W in such a way as Expression (2) shows.

$$-x(a)*W_{16}^{k} = x(a)*W_{16}^{N-k} \quad (k=0\sim N\text{-}1) \qquad \cdot\cdot\cdot (2)$$

The same explanation is adopted for the following processes so that no computation for a sign inversion is needed.

Secondly, explained below is a case in which one of both ends of the numbers of channel estimation value data that are not replaced with '0' is equal to 2 (= N/16 + 1).

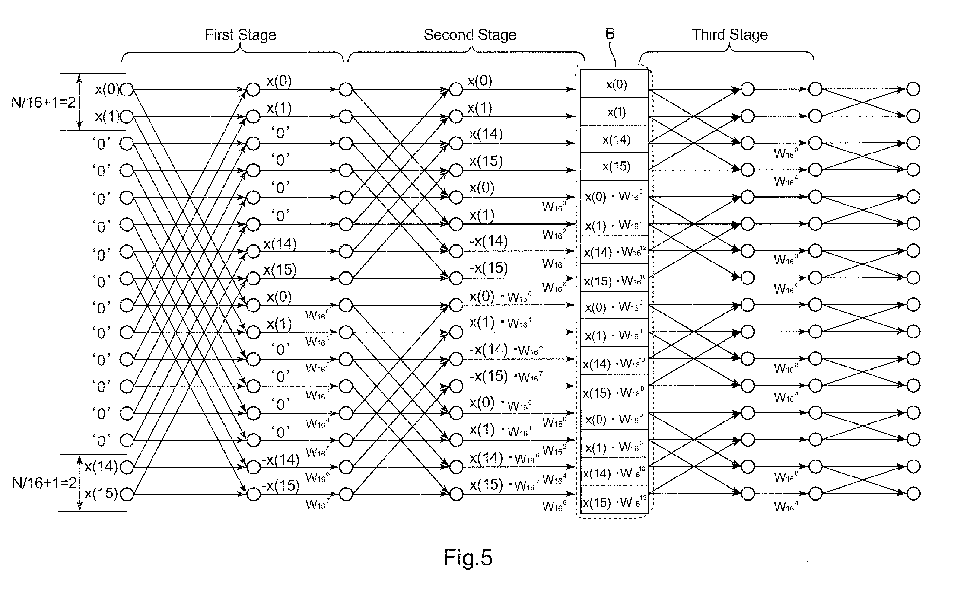

Fig. 5 is a drawing that explains a group of DFT computations in the case where one of both ends of the numbers of channel estimation value data that are not replaced with '0' is 2 (= N/16 + 1).

In the same way as explained for the first case above, if a datum at a position, not being '0', multiplied by a twiddle factor W is prepared for an input to the third stage in advance, a DFT computation at the first stage and the second stage can be skipped. Though it seems in Fig. 5 that the input to the third stage needs to be multiplied twice by a twiddle factor W, it is needed to multiply by the twiddle factor W only one time, because of Wn*Wm=(n+m), in the same manner as for the first case above.

Moreover, the input data to the third stage shown in Fig. 5 are shown as values with modification made by making use of a symmetric property of a twiddle factor W shown in Expression (2).

Namely, as "B" shows in Fig. 5, without the DFT computation at the first stage as well as the DFT computation at the second stage, $x(0)$, $x(1)$, $x(14)$, $x(15)$, $x(0)*W_{16}^{0}$, $x(1)*W_{16}^{2}$, $x(14)*W_{16}^{12}$, $x(15)*W_{16}^{10}$, $x(O)*W_{16}^{0}$, $x(1)*W_{16}^{1}$, $x(14)*W_{16}^{10}$, $x(15)*W_{16}^{9}$, $x(0)*W_{16}^{0}$, $x(1)*W_{16}^{3}$, $x(14)*W_{16}^{10}$, and $x(15)*W_{16}^{13}$ are calculated, and input into the third stage.

Thirdly, explained below is a case in which one of both ends of the numbers of channel estimation value data that are not replaced with '0' is equal to 1 (= N/16).

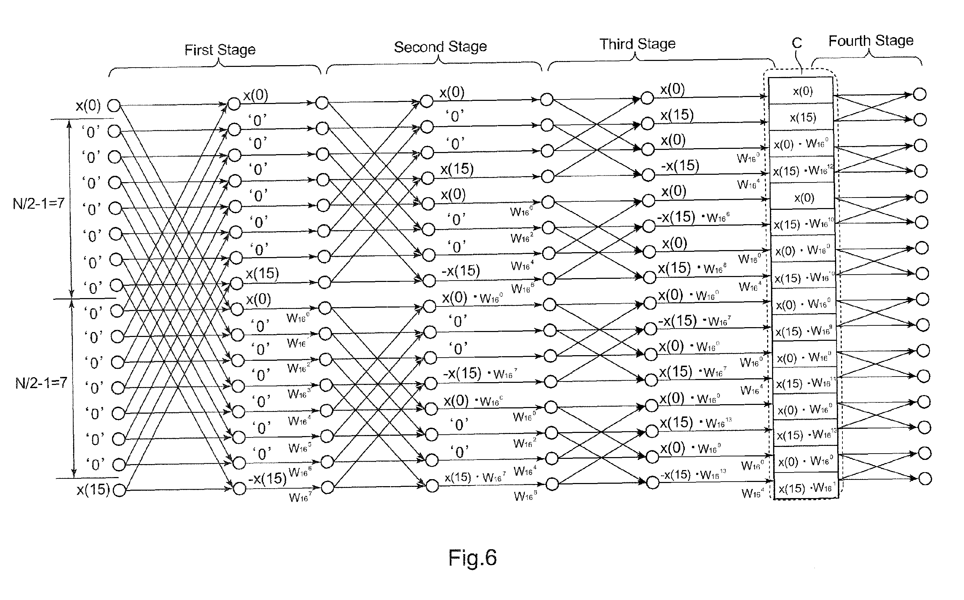

Fig. 6 is a drawing that explains a group of DFT computations in the case where one of both ends of the numbers of channel estimation value data that are not replaced with '0' is 1 (= N/16).

In the same way as explained above for the first case and the second case, if a datum at a position, not being '0', multiplied by a twiddle factor W is prepared for an input to the fourth stage in advance, a DFT computation at the first stage to the third stage can be skipped. Though it seems in Fig. 6 that the input to the fourth stage needs to be multiplied three times by a twiddle factor W, it is needed to multiply by the twiddle factor W only one time, owing to a modification of an expression in the same way as the second case, in the same manner as for the first case above.

For example, an expression of $-x(15)*W_{16}^{13}*W_{16}^{4}$ can be modified as Expression (3) shows, by making use of a symmetric property of a twiddle factor W.

$$-x(15)*W_{16}^{13}*W_{16}^{4} = -x(15)*W_{16}^{17}$$

$$= -x(15)*W_{16}^{1}$$

$$= x(15)*W_{16}^{15} \qquad \cdot\cdot\cdot (3)$$

Namely, as "C" shows in Fig. 6, without the DFT computations at the first to third stages, $x(0)$, $x(15)$, $x(0)*W_{16}^{0}$, $x(15)*W_{16}^{12}$, $x(0)$, $x(15)*W_{16}^{10}$, $x(0)*W_{16}^{0}$, $x(15)*W_{16}^{10}$, $x(0)*W_{16}^{0}$, $x(15)*W_{16}^{9}$, $x(0)*W_{16}^{0}$, $x(15)*W_{16}^{11}$, $x(0)*W_{16}^{0}$, $x(15)*W_{16}^{13}$, $x(O)*W_{16}^{0}$, and $x(15)*W_{16}^{1}$ are calculated, and input into the fourth stage.

In the above, the case with N = 16 is explained. Meanwhile, the amount of FFT computations can also be reduced in the case with another N in the same manner as for the case with N = 16. As a general rule, in the case where the number of channel estimation value data that are not replaced with '0' is equal to or greater than $['N/2^{+S+1}]$ and equal to or less than $[N/2^{S+1}]$ at each of both ends, DFT computations for S stages and multiplication by a twiddle factor for (S - 1) stages can be eliminated; wherein S {1, --- P-1}.

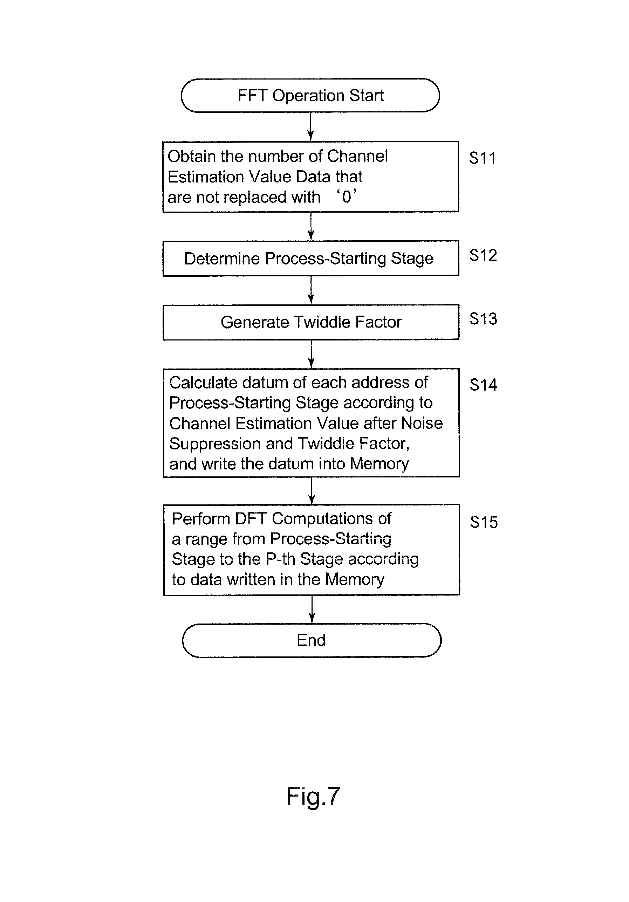

Next, an FFT operation is explained with reference to the flowchart shown in Fig. 7. At Step S11, the control unit 19 selects a storage destination for an input signal from a previous step; for example to select the memory 13 as a storage destination for an input signal from a previous step. Then, the control unit 19 obtains the number of channel estimation value data that are not replaced with '0', as a range for noise suppression; the numbers of channel estimation value data being obtained as a result of noise suppression, and being input from the previous step.

In the following explanation, an address a represents a write address of the memory 13 in the case where an FFT operation starting from the first stage is performed; an $S^{th}$ stage represents a stage where an actual process starts; and an address a' represents a write address for an input to the $S^{th}$ stage.

At Step S12, the control unit 19 determines a process-starting stage ($S^{th}$ stage) according to the number of channel estimation value data that are not replaced with '0'. At Step S13, the twiddle factor generation unit 17 generates a twiddle factor W needed for calculating an input datum to the process-starting stage determined.

At Step S14, the control unit 19 switches the selector 12 in such a way that a datum from the multiplier 11 is supplied to the memory 13. The multiplier 11 calculates a datum of each address a' of the process-starting stage, according to the channel estimation value after noise suppression and the twiddle factor, and then supplies the calculated datum to the memory 13 by the intermediary of the selector 12. In the meantime, the memory 13 internally writes the datum supplied from the multiplier 11 for storing the datum.

In other words, at the time when an input signal is written in the memory 13, an address a is converted to an address a' by the control unit 19. Moreover, the control unit 19 controls the twiddle factor generation unit 17 according to a value of the address a in order to generate an appropriate twiddle factor, in such a way that a value as a result of multiplying the twiddle factor and the input signal together by the multiplier 11 is written in the address a' of the memory 13.

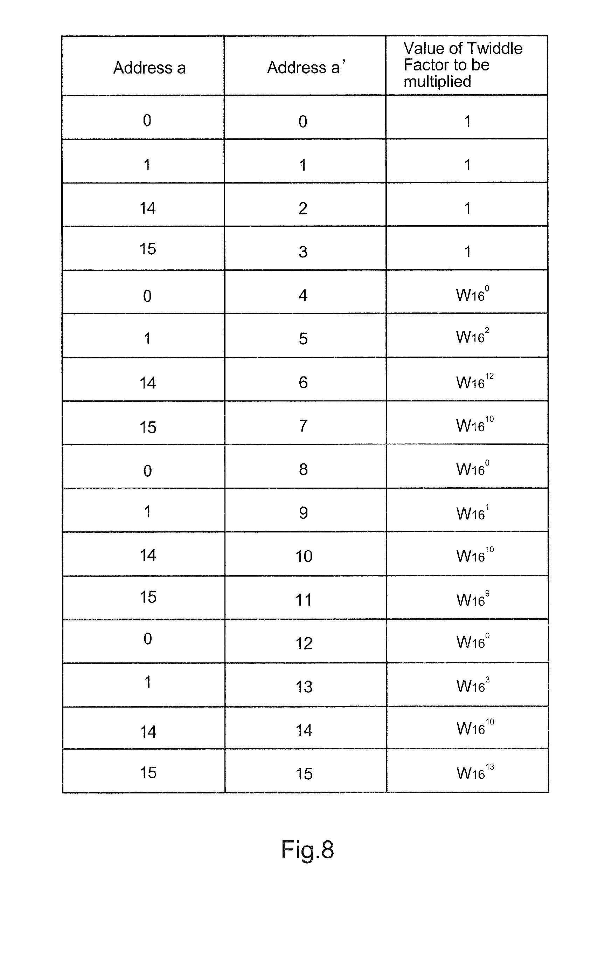

Fig. 8 shows relationships among an address a, an address a', and a twiddle factor W to be multiplied, as an example in the case of N = 16 and S = 3 (namely; the number of channel estimation value data is 16 and a process-starting stage is the third stage).

As a first row shows (a "row" is an arrangement in a horizontal direction, and it means the same in the following explanation as well) at the top in Fig. 8, an address a' being 0 and a twiddle factor W being 1 are corresponding to an address a being 0. In the same manner, as a second row from the top shows, an address a' being 1 and a twiddle factor W being 1 are corresponding to an address a being 1. Also, as a third row from the top shows, an address a' being 2 and a twiddle factor W being 1 are corresponding to an address a being 14. As a fourth row from the top shows, an address a' being 3 and a twiddle factor W being 1 are corresponding to an address a being 15. Furthermore, as a fifth row from the top shows, an address a' being 4 and a twiddle factor W being $W_{16}^0$ are corresponding to an address a being 0. Then, as a sixth row from the top shows, an address a' being 5 and a twiddle factor W being $W_{16}^2$ are corresponding to an address a being 1. As a seventh row from the top shows, an address a' being 6 and a twiddle factor W being $W_{16}^{12}$ are corresponding to an address a being 14. As a eighth row from the top shows, an address a' being 7 and a twiddle factor W being $W_{16}^{10}$ are corresponding to an address a being 15.

Moreover, as a ninth row from the top shows, an address a' being 8 and a twiddle factor W being $W_{16}^0$ are corresponding to an address a being 0. As a tenth row from the top shows, an address a' being 9 and a twiddle factor W being $W_{16}^1$ are corresponding to an address a being 1. As an eleventh row from the top shows, an address a' being 10 and a twiddle factor W being $W_{16}^{10}$ are corresponding to an address a being 14. Then, as a twelfth row from the top shows, an address a' being 11 and a twiddle factor W being $W_{16}^9$ are corresponding to an address a being 15. Moreover, as a thirteenth row from the top shows, an address a' being 12 and a twiddle factor W being $W_{16}^0$ are corresponding to an address a being 0. As a fourteenth row from the top shows, an address a' being 13 and a twiddle factor W being $W_{16}^3$ are corresponding to an address a being 1. As a fifteenth row from the top shows, an address a' being 14 and a twiddle factor W being $W_{16}^{10}$ are corresponding to an address a being 14. Then, as a sixteenth row from the top shows, an address a' being 15 and a twiddle factor W being $W_{16}^{13}$ are corresponding to an address a being 15.

Namely, in the case where the number of channel estimation value data is 16, and one of both ends of the numbers of channel estimation value data that are not replaced with '0' is 2 (= N/16 + 1), a process-starting stage is the third stage. Accordingly, at the time when an input signal is written in the memory 13, an address 'a' shown in Fig. 8 is converted to an address a' shown in Fig. 8 by the control unit 19. Furthermore, the control unit 19 controls the twiddle factor generation unit 17 according to the value of the address a in order to generate the appropriate twiddle factor shown in Fig. 8, in such a way that a value as a result of multiplying the twiddle factor and the input signal together by the multiplier 11 is written in the address a' of the memory 13.

At Step S15 in Fig.7, which the above explanation leads back to, the memories 13 and 14, the selector 15, the 2-point DFT computation unit 16, the twiddle factor generation unit 17, and the multiplier 18 perform DFT computations of a range from the process-starting stage to the $P^{th}$ stage as a final stage, according to the data written in the memory 13, on the basis of control by the control unit 19, and finish the FFT operation in the end.

In other words, after all input signals are written in the memory 13, the control unit 19 switches the selector 15 in such a way as to read from the memory 13 in which the input signals are stored, and to write into the memory 14. Then, the control unit 19 starts the FFT operation, beginning with the $S^{th}$ stage; and performs the FFT operation of a range up to the $P^{th}$ stage. Incidentally, in the operation of the range from the $S^{th}$ stage to the $P^{th}$ stage, the control unit 19 operates the selector 15 in such a way that, each time after finishing the operation of a stage, a result of a preceding stage is read out by a subsequent stage.

Furthermore, in the above procedure, a datum replaced with '0' is controlled by the control unit 19 so as not to be written in the memory 13.

In this way, in an FFT operation in which a range of an input signal being '0' is obvious beforehand; if the number of channel estimation value data that are not replaced with '0' is equal to or greater than $[N/2^{S+2} + 1]$ and equal to or less than $(N/2^{S+1})$ at each of both ends, DFT computations for S stages and multiplication by a twiddle factor for (S - 1) stages can be eliminated.

As a result of noise suppression, with respect to channel estimation values after the noise suppression, most of time-domain channel estimation values in a middle portion are '0'. Therefore, by making use of this effect, it becomes possible to reduce the amount of FFT operation for transforming the channel estimation values after the noise suppression into a frequency domain.

Thus, in the case of suppressing a noise contained in a time-domain channel estimation value, for channel estimation in wireless communication in which a great number of subcarriers are used for communication, it is possible to implement a circuit that enables fast transform of a channel estimation value after noise suppression from a time domain to a frequency domain. Then, while unnecessary computation is eliminated, a reduction in the amount of operation can be materialized.

Furthermore, the reduction in the amount of FFT operation can also be materialized by contriving a way of FFT stage processing, not by controlling a write destination and controlling multiplication by a twiddle factor at the time of storing an input signal into either the memory 13 or 14.

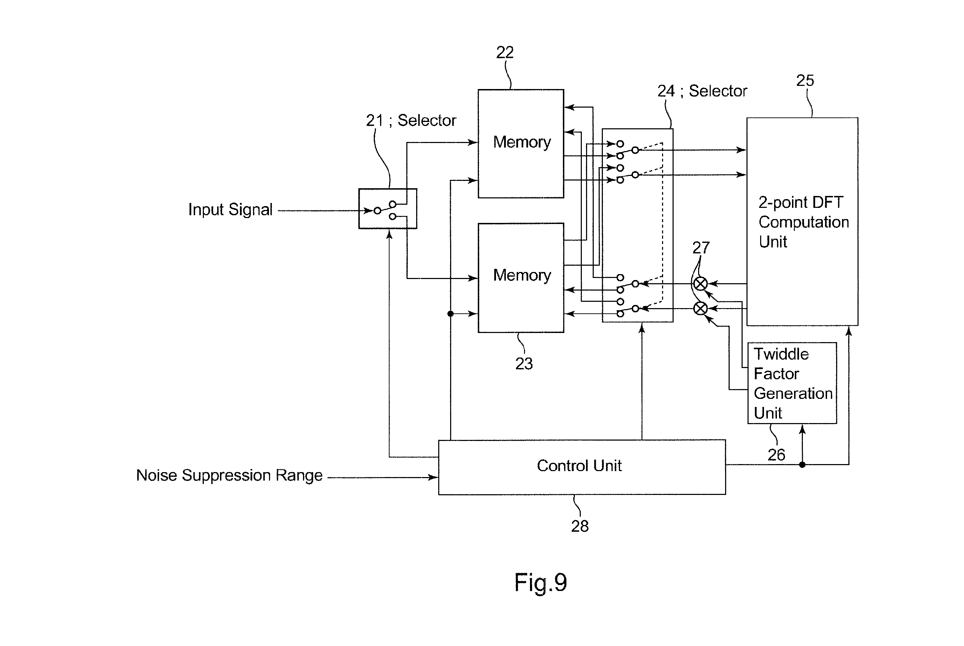

Fig. 9 is a block diagram showing a configuration example of a section for demodulating an OFDM signal of a receiver in another embodiment of the present invention.

The section for demodulating an OFDM signal of the receiver shown in Fig. 9 is so configured as to include a selector 21, memories 22 and 23, another selector 24, a 2-point DFT computation unit 25, a twiddle factor generation unit 26, a multiplier 27, and a control unit 28. The section for demodulating an OFDM signal of the receiver shown in Fig. 9 is not provided with a unit corresponding to the multiplier 11 of Fig. 1.

The selector 21 is a selector for selecting a storage destination for an input signal, and it supplies a datum supplied from a previous step to either the memory 22 or 23, according to an instruction coming from the control unit 28. The memories 22 and 23 are each composed of a semiconductor memory or the equivalent; and these units store input data, output data or intermediary values of a Fast Fourier Transform. The memories 22 and 23 are each structured in such a way as to store N sets of complex data.

In a computation of a Fast Fourier Transform, the selector 24 switches between the memories 22 and 23 as a readout source and a write destination for the 2-point DFT computation unit 25.

The 2-point DFT computation unit 25 applies a 2-point DFT computation with a radix-2, to the input datum or the intermediary value of the Fast Fourier Transform, the input datum and the intermediary value being stored in one of the memories 22 and 23 and being supplied through the selector 24; and then the 2-point DFT computation unit 25 supplies a result obtained by the computation to the multiplier 27.

The twiddle factor generation unit 26 generates a twiddle factor W by which an output datum coming from the 2-point DFT computation unit 25 is multiplied.

The multiplier 27 multiplies the result of the DFT computation with a radix-2 by an operator supplied from the twiddle factor generation unit 26, the result of the DFT computation being supplied from the 2-point DFT computation unit 25. Then, a datum of a product obtained as a result of the multiplication is supplied to the other of the memories 22 and 23 by the intermediary of the selector 24, as an output datum of the Fast Fourier Transform. In this context, when the memory 22 stores the input datum or the intermediary value to the DFT computation with a radix-2 in the 2-point DFT computation unit 25, "the other of the memories 22 and 23" represents the memory 23. Meanwhile, when the memory 23 stores the input datum or the intermediary value to the DFT computation with a radix-2 in the 2-point DFT computation unit 25, "the other of the memories 22 and 23" represents the memory 22.

Referring to the numbers of channel estimation value data that are not replaced with '0', the control unit 28 controls the selector 21, the memories 22 and 23, the selector 24, the 2-point DFT computation unit 25, and the twiddle factor generation unit 26, the numbers of channel estimation value data having been input as a range for noise suppression, and having been obtained as a result of noise suppression. Then, the control unit 28 conducts various operations, such as selecting a write destination of an input signal, generating a readout address or a write address of the memory 22 or 23, controlling a twiddle factor generating operation, regulating or controlling the number of 2-point DFT computations or processing stages, and selecting a readout source of an input of the 2-point DFT computations or a write destination of an output of the same.

In the section for demodulating an OFDM signal of the receiver shown in Fig. 9, an input signal is stored in one of the memories 22 and 23, in the same way as for an FFT beginning with the first stage. In the following explanation, it is assumed that an input signal is stored in the memory 22.

In the section for demodulating an OFDM signal of the receiver shown in Fig. 9, an FFT operation is performed, beginning with the S-1th stage. At the S-1th stage, without performing a 2-point DFT computation, the 2-point DFT computation unit 25 outputs a datum read out from an address a of the memory 22, as it is. The control unit 28 controls the twiddle factor generation unit 26 according to the value of the address a in order to generate an appropriate twiddle factor, in such a way that a value as a result of multiplying the twiddle factor and the datum read out from the address a of the memory 22 together is written in an address a' of the memory 23.

After the operation for the 8-1$^{th}$ stage, the control unit 28 switches the selector 24 in such a way as to read from the memory 23 and write into the memory 22.

An operation beginning with the S$^{th}$ stage is the same as the operation already explained with reference to the flowchart of Fig. 7 (a procedure of Step S15), and therefore an explanation about the operation is omitted.

Thus, the amount of computations can be further reduced.

The series of processes described above may be executed by means of hardware, and may also be executed by way of software. For executing the series of processes by way of software, a computer program constituting the software is installed into a computer, which is built in exclusive-use hardware, from a computer program recording medium; or the software is installed from a computer program recording medium, for example, into a general-purpose personal computer that can execute various functions with various computer programs being installed.

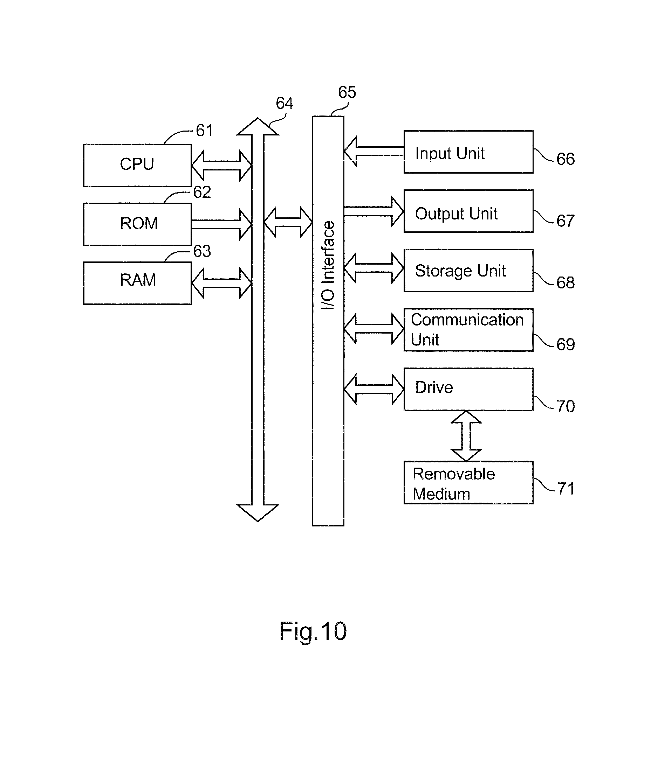

Fig. 10 is a block diagram showing a configuration example of hardware of a computer that executes the series of processes described above by way of a computer program.

In the computer; a central processing unit (CPU) 61, a read only memory (ROM) 62, and a random access memory (RAM) 63 are interconnected by using a bus 64.

Moreover, an I/O interface 65 is connected to the bus 64. Connected to the I/O interface 65 are; an input unit 66 including a keyboard, a mouse, a microphone, and the like; an output unit 67 including a display, a speaker, and the like; a storage unit 68 including a hard disc, a non-volatile memory, and the like; a communication unit 69 including a network interface and the like; and a drive 70 for driving a removable medium 71 such as a magnetic disc, an optical disc, a magnetic optical disc, or a semiconductor memory.

In the computer configured as described above, the CPU 61 loads a computer program, for example, stored in the storage unit 68, to the RAM 63 by way of the I/O interface 65 and the bus 64, and executes the program in order to carry out the series of processes described above.

The computer program to be executed by the computer (the CPU 61) is recorded, for being provided, in the removable medium 71 as a package medium; such as, for example, a magnetic disc (including a flexible disc), an optical disc (Compact Disc - Read Only Memory (CD-ROM), Digital Versatile Disc (DVD), and the like), a magnetic optical disc, or a semiconductor memory; or the computer program is provided via a wired or wireless transmission medium such as a local area network, the Internet, or digital satellite broadcasting.

Then, the computer program can be installed in the computer by way of being stored in the storage unit 68 through the I/O interface 65, while the removable medium 71 being mounted on the drive 70. Alternatively, the computer program can be installed in the computer by way of being stored in the storage unit 68, while being received in the communication unit 69 by the intermediary of a wired or wireless transmission medium. In another way, the computer program can previously be installed in the computer by way of storing the program in advance in the ROM 62 or the storage unit 68.

Incidentally, the program to be executed by the computer may be a program with which processes are carried out in chronological order along the sequence explained in this specification document, or may be a program with which processes are carried out in parallel or at the time as required, such as, in response to a call.

Furthermore, a scope of application of the embodiment of the present invention is not limited only to the embodiments described above, and various other variations may be made without departing from the concept of the present invention.

{Reference Signs List}

11. Multiplier, 12. Selector, 13. Memory, 14. Memory, 15. Selector, 16. 2-point DFT Computation Unit, 17. Twaddle Factor Generation Unit, 18. Multiplier, 19. Control Unit, 21. Selector, 22. Memory, 23. Memory, 24. Selector, 25. 2-point DFT Computation Unit, 26. Twaddle Factor Generation Unit, 27. Multiplier, 28. Control Unit, 61. CPU, 62. ROM, 63. RAM, 68. Storage Unit, 69. Communication Unit, 71. Removable Medium

**Claims**

1.   A receiver for receiving a signal containing a frequency-domain channel estimation value composed of N pieces of data (wherein N is a power of 2), and computing a time-domain channel estimation value by way of DFT (Discrete Fourier Transform) computations of P times (P represents $\log_2 N$) with respect to the channel estimation value, the receiver comprising:

a determination means for determining an M<sup>th</sup> DFT computation (M is equal to or greater than 2, and equal to or less than P), with which the DFT computation begins, out of the DFT computations of P times, according to the number of data, having been not replaced with '0', out of the N pieces of data constituting the frequency-domain channel estimation value obtained from the signal received;

a generation means for generating a twiddle factor for computing a datum to be input into the M<sup>th</sup> DFT computation determined;

a calculation means for calculating a datum to be input into the M<sup>th</sup> DFT computation, by using the frequency-domain channel estimation value obtained from the signal received and the twiddle factor generated; and

a computation means for computing the time-domain channel estimation value by performing DFT computations in a range from the M<sup>th</sup> DFT computation to the P<sup>th</sup> DFT computation.

2. The receiver according to claim 1: wherein, the receiver receives a signal of an Orthogonal Frequency Division Multiplexing (OFDM) scheme.

3. The receiver according to claim 1: wherein,
   the receiver further comprises a memory unit for storing a datum to be input into a DFT computation;
   the calculation means calculates a datum to be input into the M<sup>th</sup> DFT computation, by using the frequency-domain channel estimation value input from a previous step and the twiddle factor generated; and
   the memory unit stores the calculated datum to be input into the M<sup>th</sup> DFT computation.

4. The receiver according to claim 1: wherein,
   the receiver further comprises a first memory unit and a second memory unit;
   the first memory unit stores the frequency-domain channel estimation value input from a previous step;
   the calculation means calculates a datum to be input into the M<sup>th</sup> DFT computation, by using the channel estimation value stored in the first memory unit and the twiddle factor generated; and
   the second unit stores the calculated datum to be input into the M<sup>th</sup> DFT computation.

5. A receiving method for receiving a signal containing a frequency-domain channel estimation value composed of N pieces of data (wherein N is a power of 2), and computing a time-domain channel estimation value by way of DFT computations of P times (P represents $\log_2 N$) with respect to the channel estimation value, the receiving method comprising steps of:

   determining an M<sup>th</sup> DFT computation (M is equal to or greater than 2, and equal to or less than P), with which the DFT computation begins, out of the DFT computations of P times, according to the number of data, having been not replaced with '0', out of the N pieces of data constituting the frequency-domain channel estimation value obtained from the signal received;

   generating a twiddle factor for computing a datum to be input into the M<sup>th</sup> DFT computation determined;

   calculating a datum to be input into the M<sup>th</sup> DFT computation, by using the frequency-domain channel estimation value obtained from the signal received and the twiddle factor generated; and

   computing the time-domain channel estimation value by performing DFT computations in a range from the M<sup>th</sup> DFT computation to the P<sup>th</sup> DFT computation.

6. A computer program of a computer constituting a receiver for receiving a signal containing a frequency-domain channel estimation value composed of N pieces of data (wherein N is a power of 2), and computing a time-domain channel estimation value by way of DFT computations of P times (P represents $\log_2 N$) with respect to the channel estimation value, the computer program comprising:

   a determination step for determining an M<sup>th</sup> DFT computation (M is equal to or greater than 2, and equal to or less than P), with which the DFT computation begins, out of the DFT computations of 'P' times, according to the number of data, having been not replaced with '0', out of the N pieces of data constituting the frequency-domain channel estimation value obtained from the signal received;

   a generation step for generating a twiddle factor for computing a datum to be input into the M<sup>th</sup> DFT computation determined;

   a calculation step for calculating a datum to be input into the M<sup>th</sup> DFT computation, by using the frequency-domain channel estimation value obtained from the signal received and the twiddle factor generated; and

   a computation step for computing the time-domain channel estimation value by performing DFT computations in a range from the M<sup>th</sup> DFT computation to the P<sup>th</sup> DFT computation.

Fig.1

Fig.2

Fig.3

Fig.4

Fig.5

Fig.6

```
           ╭─────────────────────────────────╮
           │       FFT Operation Start       │
           ╰─────────────────────────────────╯
                           │
                           ▼
     ┌─────────────────────────────────┐
     │ Obtain the number of Channel    │   S11
     │ Estimation Value Data that      │
     │ are not replaced with '0'       │
     └─────────────────────────────────┘
                           │
                           ▼
     ┌─────────────────────────────────┐
     │ Determine Process-Starting Stage│   S12
     └─────────────────────────────────┘
                           │
                           ▼
     ┌─────────────────────────────────┐
     │     Generate Twiddle Factor     │   S13
     └─────────────────────────────────┘
                           │
                           ▼
     ┌─────────────────────────────────┐
     │ Calculate datum of each address │   S14
     │ of Process-Starting Stage       │
     │ according to Channel Estimation │
     │ Value after Noise Suppression   │
     │ and Twiddle Factor,             │
     │ and write the datum into Memory │
     └─────────────────────────────────┘
                           │
                           ▼
     ┌─────────────────────────────────┐
     │ Perform DFT Computations of     │   S15
     │ a range from Process-Starting   │
     │ Stage to the P-th Stage         │
     │ according to data written in    │
     │ the Memory                      │
     └─────────────────────────────────┘
                           │
                           ▼
           ╭─────────────────────────────────╮
           │             End                 │
           ╰─────────────────────────────────╯
```

Fig.7

| Address a | Address a' | Value of Twiddle Factor to be multiplied |
|:---:|:---:|:---:|
| 0 | 0 | 1 |
| 1 | 1 | 1 |
| 14 | 2 | 1 |
| 15 | 3 | 1 |
| 0 | 4 | $W_{16}^{0}$ |
| 1 | 5 | $W_{16}^{2}$ |
| 14 | 6 | $W_{16}^{12}$ |
| 15 | 7 | $W_{16}^{10}$ |
| 0 | 8 | $W_{16}^{0}$ |
| 1 | 9 | $W_{16}^{1}$ |
| 14 | 10 | $W_{16}^{10}$ |
| 15 | 11 | $W_{16}^{9}$ |
| 0 | 12 | $W_{16}^{0}$ |
| 1 | 13 | $W_{16}^{3}$ |
| 14 | 14 | $W_{16}^{10}$ |
| 15 | 15 | $W_{16}^{13}$ |

Fig.8

Fig.9

Fig.10

EP 2 661 001 A1

Base Station 101

Encoder 111 → Modulator 112 → ODFM Signal Generator 113 → D/A Converter 114

115

131

User Terminal 121

A/D Converter 132 → OFDM Signal Demodulator 133 → Demodulator 134 → Decoder 135

Fig.11

| | | |
|---|---|---|
| **INTERNATIONAL SEARCH REPORT** | International application No. | |
| | PCT/JP2011/080213 | |

A.  CLASSIFICATION OF SUBJECT MATTER
*H04J11/00*(2006.01)i, *G06F17/14*(2006.01)i

According to International Patent Classification (IPC) or to both national classification and IPC

B.  FIELDS SEARCHED

Minimum documentation searched (classification system followed by classification symbols)
H04J11/00, G06F17/14

Documentation searched other than minimum documentation to the extent that such documents are included in the fields searched
Jitsuyo Shinan Koho        1922-1996   Jitsuyo Shinan Toroku Koho   1996-2012
Kokai Jitsuyo Shinan Koho   1971-2012   Toroku Jitsuyo Shinan Koho   1994-2012

Electronic data base consulted during the international search (name of data base and, where practicable, search terms used)
IEEE Xplore, CiNii

C.  DOCUMENTS CONSIDERED TO BE RELEVANT

| Category* | Citation of document, with indication, where appropriate, of the relevant passages | Relevant to claim No. |
|---|---|---|
| A | JP 2008-236154 A  (NEC Corp.),<br>02 October 2008 (02.10.2008),<br>entire text; all drawings<br>(Family: none) | 1-6 |
| A | JP 2006-221648 A  (Samsung Electronics Co., Ltd.),<br>24 August 2006 (24.08.2006),<br>entire text; all drawings<br>& US 2006/0200513 A1    & KR 10-2006-0091019 A | 1-6 |
| A | JP 2006-504324 A  (Electronics and Telecommunications Research Institute),<br>02 February 2006 (02.02.2006),<br>claim 22<br>& US 2006/0072649 A1     & EP 1554831 A<br>& WO 2004/038972 A1 | 1-6 |

☒  Further documents are listed in the continuation of Box C.        ☐   See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 09 February, 2012 (09.02.12) | 21 February, 2012 (21.02.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
|---|
| PCT/JP2011/080213 |

C (Continuation).    DOCUMENTS CONSIDERED TO BE RELEVANT

| Category* | Citation of document, with indication, where appropriate, of the relevant passages | Relevant to claim No. |
|---|---|---|
| A | Markel, J., FFT pruning, Audio and Electroacoustics, IEEE Transactions on, 1971.12, VOL.AU-19, NO.4, pp.305-311 | 1-6 |
| A | Khalid Mahmood Aamir, et al., On Cooley-Tukey FFT Method for Zero Padded Signals, Emerging Technologies, 2005. Proceedings of the IEEE Symposium on, 2005.09.18, pp.41-45 | 1-6 |
| A | Cookler Todor et al., "Pruning the Real-Valued FFT Algorithms for Efficient Interpolation and Linear Convolution", IEICE Technical Report, 21 May 1993 (21.05.1993), vol.93, no.34, pages 1 to 8 | 1-6 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010290031 A

- JP 2008124964 A